# EUROPÄISCHE PATENTSCHRIFT

(11) **EP 1 143 187 B1**
(45) Veröffentlichungstag und Bekanntmachung des Hinweises auf die Patenterteilung: **01.09.2004**
(21) Anmeldenummer: 01106973.9
(22) Anmeldetag: 21.03.2001
(51) Int. Cl.: F16L 37/14, F16L 37/088

(54) **Steckkupplung mit zwei zusammensteckbaren rohrförmigen Kupplungsteilen**
Plug-in coupling with two interlocking tubular coupling parts
Raccord emboîtable avec deux parties tubulaires d'accouplement

(30) Priorität: 08.04.2000 DE 10017679
(43) Veröffentlichungstag der Anmeldung: 10.10.2001
(73) Patentinhaber: Rasmussen GmbH, 63477 Maintal (DE)
(72) Erfinder: Bahner, Frank, 63071 Offenbach (DE); Bauer, Andreas, 63936 Schneeberg (DE)
(74) Vertreter: Knoblauch, Andreas, Dr.-Ing.

(56) Entgegenhaltungen:
- EP-A- 0 444 304
- DE-A- 19 601 667
- US-A- 4 009 896
- US-A- 4 260 184
- US-A- 4 867 487

## Beschreibung

Die Erfindung bezieht sich auf eine Steckkupplung gemäß dem Oberbegriff des Anspruchs 1.

Bei einer bekannten Steckkupplung (EP 0 392 234 A2) sind der Dichtring und der Sicherungsring an der Innenseite einer äußeren Umfangswand des Aufnahmeabschnitts eines um 90° abgewinkelten Kupplungsteils axial hinter den der Durchführung des Haltebügels dienenden Schlitzen angeordnet. Der Aufnahmeabschnitt ist daher verhältnismäßig lang, so daß er eine hinreichende radiale Abstützung des Einsteckabschnitts im zusammengekuppelten Zustand gegen ein Abwinkeln gewährleistet. Dagegen ist die Länge des Aufnahmeabschnitts bei beengten Einbauverhältnissen, wie sie im Motorraum eines Kraftfahrzeugs vorliegen, häufig zu groß. Im entkuppelten Zustand liegt die als Dichtfläche wirkende Außenseite des Einsteckabschnitts frei. Sie kann daher leicht durch mechanische Einwirkungen, z.B. bei einem Transport, beschädigt werden. Die Folge könnte eine Undichtigkeit der Verbindung sein.

Aus der DE 27 17 973 C2 ist eine Steckkupplung mit zwei zusammensteckbaren rohrförmigen Kupplungsteilen zum Verbinden ein Fluid führender Bauteile bekannt, bei der ein Einsteckabschnitt des einen Kupplungsteils eine Ringnut und ein Aufnahmeabschnitt des anderen Kupplungsteils zwei sich diametral gegenüberliegende Schlitze und einen etwa U-förmigen elastischen Haltebügel aufweist, dessen Schenkel durch die Schlitze ragen und beim Zusammenstecken der Kupplungsteile in die Ringnut einrasten. Der Aufnahmeabschnitt hat eine radial äußere Umfangswand und eine radial innere Umfangswand, zwischen denen der Einsteckabschnitt einsteckbar ist. Ferner enthält die Steckkupplung einen Dichtring zur gegenseitigen Abdichtung der zusammengesteckten Kupplungsteile. Der Dichtring ist auf einem Rohr, das das eine der beiden zu verbindenden, ein Fluid führenden Bauteile bildet, zwischen einem kegelstumpfförmigen Kopf oder Wulst am einen Ende des Rohres und einer radialen Stirnfläche der inneren Umfangswand angeordnet. Bei dieser Anordnung müssen der Dichtring und das den Aufnahmeabschnitt aufweisende zweite Kupplungsteil zuvor auf dem Rohr montiert werden, um die Kupplungsteile zusammenstecken zu können. Diese Vormontage ist bei einem verhältnismäßig langen Rohr oder einem Rohr in Form eines Rohrstutzens, dessen anderes Ende bereits mit einem dritten Bauteil, z.B. dem Kühler eines Kraftfahrzeugs, verbunden ist, schwierig oder gar nicht möglich, da sich zumindest das zweite Kupplungsteil nicht über den Kopf oder Wulst des Rohres hinwegschieben ließe, weil der Innendurchmesser der inneren Umfangswand des zweiten Kupplungsteils an den Außendurchmesser des Rohres angepaßt ist und die Gefahr einer Überdehnung des Dichtrings bestünde.

Der Erfindung liegt die Aufgabe zugrunde, eine Steckkupplung der eingangs genannten Art anzugeben, deren Steckbereich kürzer ist, aber dennoch eine hinreichende gegenseitige radiale Abstützung von Einsteckabschnitt und Aufnahmeabschnitt gegen ein Abwinkeln und eine sicherere gegenseitige Abdichtung der Kupplungsteile gewährleistet.

Erfindungsgemäß ist diese Aufgabe dadurch gelöst, daß die zweite Ringnut im zusammengesteckten Zustand der Kupplungsteile radial innerhalb des Einsteckabschnitts in derselben Radialebene wie die erste Ringnut liegt und daß die radial innere Umfangswand auf ihrer radial äußeren Umfangsseite die zweite Ringnut aufweist.

Dadurch, daß die Ringnuten in derselben Radialebene liegen, ist es möglich, die Baulänge des Steckbereichs, d.h. sowohl des Aufnahme- als auch des Einsteckabschnitts, kürzer als bisher auszubilden. Dennoch ergibt sich aufgrund der Doppelwandigkeit des Aufnahmeabschnitts eine hinreichende gegenseitige radiale Abstützung und Führung der beiden zusammengesteckten Abschnitte gegen ein gegenseitiges radiales Abwinkeln der beiden Abschnitte, um die Dichtigkeit der Verbindung zu gewährleisten. Da ferner die zweite Ringnut und damit auch der Dichtring im zusammengesteckten (eingekuppelten) Zustand der Kupplungsteile radial innerhalb des Einsteckabschnitts liegt, liegt eine der beiden Dichtflächen, die mit dem Dichtring in Berührung stehen bzw. kommen, sowohl im ein- als auch im ausgekuppelten Zustand stets radial nach außen hin geschützt innerhalb des Einsteckabschnitts und die andere Dichtfläche innerhalb des durch die beiden Umfangswände des Aufnahmeabschnitts gebildeten Ringraums nach außen geschützt, so daß die Gefahr einer Beschädigung der Dichtflächen radial von außen her vermieden und dementsprechend die Dichtigkeit der Verbindung zuverlässiger gewährleistet ist.

Vorzugsweise sind die Umfangswände einstückig mit ihrem Kupplungsteil geformt. Dies vereinfacht ihre Herstellung.

Ferner können die Kupplungsteile aus hochtemperaturbeständigem Kunststoff hergestellt sein, so daß sie insbesondere den hohen Temperaturen standhalten, wie sie im Motorraum eines Kraftfahrzeugs auftreten.

Wenn der Kunststoff ein lineares, teilkristallines Polyphenylensulfid ist, kann er Temperaturen bis zu 240°C, kurzzeitig sogar bis zu 270°C standhalten. Darüber hinaus hat dieses Material eine hohe Flammfestigkeit, sehr gute Chemikalien- und Oxydationsbeständigkeit, eine hohe Härte und Steifheit sowie eine geringe Wasseraufnahme und auch bei erhöhten Temperaturen nur eine geringe Kriechneigung. Durch den Zusatz von Verstärkungsfüllstoffen, wie Glasfasern und Glasfaser-Mineral-Mischungen, kann die Steifigkeit und Festigkeit sowie die Wärmeformbeständigkeit weiter gesteigert werden.

Sodann kann das eine Kupplungsteil, vorzugsweise das den Aufnahmeabschnitt aufweisende Kupplungsteil, am Ende seines Steckbereiches abgewinkelt sein. Dies verkürzt nicht nur die Axiallänge des betreffenden Kupplungsteils, um es zwischen zwei Aggregaten platzsparend einzubauen, sondern erübrigt auch, daß ein gegebenenfalls am anderen Ende zu befestigender Schlauch an seinem Ende abgewinkelt bzw. gekrümmt hergestellt werden muß, was äußerst arbeitsaufwendig ist, da eine solche Formgebung des Schlauchendes überwiegend manuell erfolgt.

Die Erfindung und ihre Weiterbildungen werden nachstehend anhand der beiliegenden Zeichnung eines bevorzugten Ausführungsbeispiels näher beschrieben. Es zeigen:
- Fig. 1: eine perspektivische Ansicht eines einen Aufnahmeabschnitt aufweisenden Kupplungsteils einer erfindungsgemäßen Steckkupplung und
- Fig. 2: eine Schnittansicht einer erfindungsgemäßen Steckkupplung im zusammengesteckten Zustand, in der nur der Einsteckabschnitt des einen Kupplungsteils dargestellt ist.

Das dargestellte Ausführungsbeispiel einer erfindungsgemäßen Steckkupplung besteht aus zwei zusammensteckbaren rohrförmigen Kupplungsteilen zum Verbinden zweier ein Fluid führender Bauteile, z.B. eines Kühlers eines Kraftfahrzeugs und des Kühlwasserschlauches, vorzugsweise zur Durchführung der Ladeluft eines Turboladers, ferner aus einem Haltebügel 3, einem Dichtring 4 und einem Sicherungsring 5.

Das Kupplungsteil 1 hat einen Aufnahmeabschnitt 6 und einen demgegenüber am Ende des Aufnahmeabschnitts 6 um etwa 90° abgewinkelten Anschlußabschnitt 7, auf dem ein Schlauch mittels einer Schelle zwischen einem Anschlagbund 8 und einer Halterippe 9 befestigt werden kann.

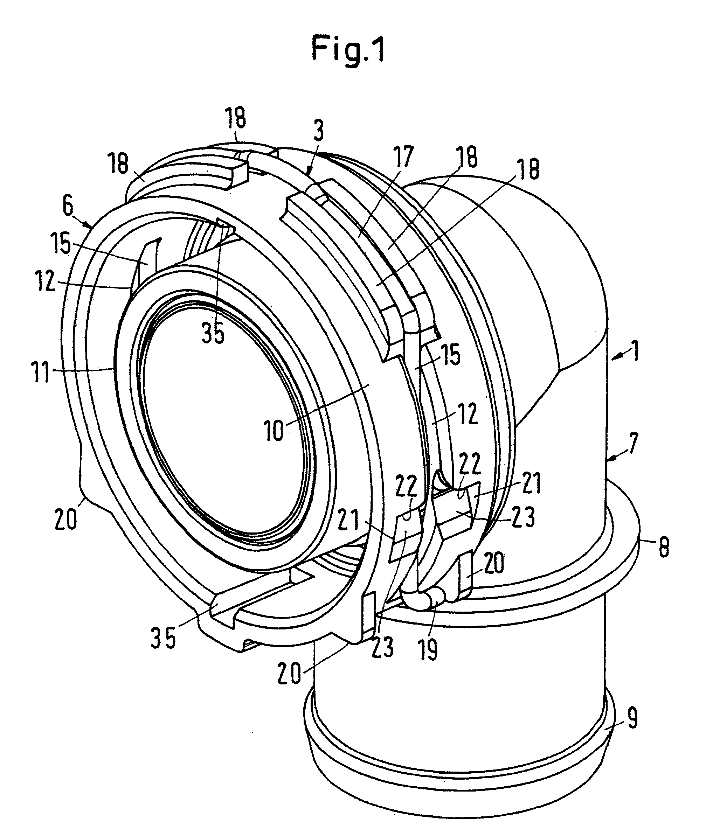

Der Aufnahmeabschnitt 6 hat eine radial äußere Umfangswand 10 und eine radial innere Umfangswand 11. In der Umfangswand 10 sind zwei sich diametral gegenüberliegende, radial durchgehende Schlitze 12 ausgebildet, die sich über einen Bogen der Umfangswand 10 erstrecken. Die Schlitze 12 fluchten mit einer Ringnut 13 in der äußeren Umfangsseite eines am Ende des Kupplungsteils 2 ausgebildeten Einsteckabschnitts 14. In die Schlitze 12 greift der etwa U-förmige Haltebügel 3 mit seinen Schenkeln 15 ein. Der Haltebügel 3 besteht aus Stahlfederdraht und ist daher elastisch. Die Schenkel 15 liegen mit mittleren Abschnitten radial innerhalb der äußeren Umfangswand 10 und mit ihrem die Schenkel 15 verbindenden Quersteg 17 radial außerhalb der Umfangswand 10. Der Quersteg 17 erstreckt sich zwischen zwei radial nach außen von der Umfangswand 10 vorstehenden und sich in Umfangsrichtung erstreckenden Paaren paralleler Rippen 18 und ragt zwischen den Rippenpaaren 18 in einem kürzeren Mittelbereich radial über die Rippenpaare 18 hinaus. Die freien Enden der Schenkel 15 liegen axial in entgegengesetzten Richtungen umgebogenen Endabschnitten 19 an der Außenseite der Umfangswand 10 an. Von den Endabschnitten 19 ist nur einer in Fig. 1 sichtbar.

Um Bedienungspersonen vor Verletzungen zu schützen, enden die Endabschnitte 19 in der dargestellten Betriebslage vor einem von zwei axial miteinander fluchtenden Vorsprüngen 20. Ferner sind am Rand der Schlitze 12 in der Außenseite der Umfangswand 10 axiale Nuten 21 mit einer radialen Seitenwand 22 und einer schrägen Seitenwand 23 ausgebildet. In die Nuten 21 kann beim radialen Herausziehen des Haltebügels jeweils einer der Endabschnitte 19 einrasten, um ein unabsichtliches völliges radiales Herausziehen des Haltebügels 3 aus den Schlitzen 12 zu verhindern, wobei die Endabschnitte 19 dann jeweils an einer der radialen Seitenwände 22 anschlagen, da die Schenkel 15 unter einer radial nach innen gerichteten Vorspannung stehen.

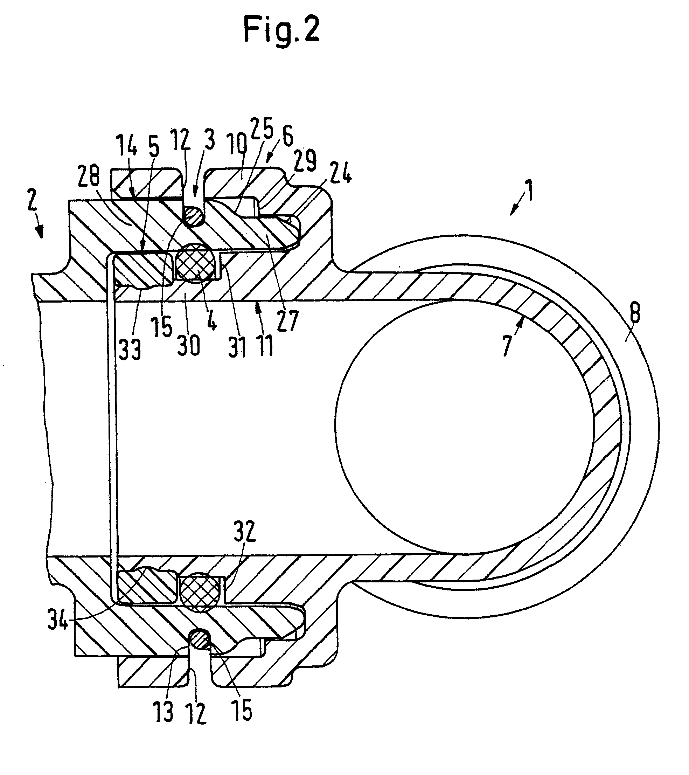

Der Einsteckabschnitt 14 ist in Einsteckrichtung vor der Ringnut 13 mit radial äußeren schrägen oder konischen Ringflächen (Fasen) 24 und 25 versehen. Beim Zusammenstecken der Kupplungsteile 1 und 2 in die in Fig. 2 dargestellte Lage gleiten die Schenkel 15 des Haltebügels 3 über die schrägen Flächen 24 und 25 hinweg, um dann in die Ringnut 13 einzurasten. Aufgrund der schrägen Fläche 25 hat ein Endabschnitt 27 des Einsteckabschnitts 14 eine geringere Wandstärke als der hintere Teil 28, wobei der Ringraum zwischen den Umfangswänden 10 und 11 bis hinter die Schlitze 12 eine der Wandstärke des Teils 28 entsprechende radiale Weite hat, um sich dann im Bereich des dünneren Endabschnitts 27 über eine Stufe 29 bis auf die Wandstärke des Endabschnitts 27 zu verringern. Der Endabschnitt 27 ragt dann im zusammengesteckten Zustand, an den Umfangswänden 10 und 11 anliegend, in den schmaleren Endabschnitt des Ringraums.

Die radial innere Umfangswand 11 des Aufnahmeabschnitts 6 hat ebenfalls einen abgestuften Durchmesser, jedoch auf ihrer radial äußeren Seite, wobei der Sicherungsring 5, der dünnere Endabschnitt 30 der inneren Umfangswand 11 und eine Schulter 31 der Umfangswand 11 eine Ringnut 32 begrenzen, die in derselben Radialebene wie die Ringnut 13 liegt. Dadurch kann der Steckbereich, in dem sich der Aufnahmeabschnitt 6 und der Einsteckabschnitt 14 überlappen, kürzer als im Stand der Technik ausgebildet sein, selbst wenn die Ringnuten 13 und 32 nicht genau in der gleichen Radialebene liegen. Desgleichen verhindert der doppelwandige Aufnahmeabschnitt 6 und der zwischen den Umfangswänden 10 und 11 liegende Ringraum, der den Einsteckabschnitt 14 eng aufnimmt, in Verbindung mit dem Sicherungsring 5, dessen Außendurchmesser ebenfalls nahezu gleich dem Innendurchmesser des Einsteckabschnitts 14 ist, ein radiales gegenseitiges Auswinkeln von Aufnahmeabschnitt 6 und Einsteckabschnitt 14 bei radialer Belastung des einen oder anderen Kupplungsteils 1, 2 oder beider, z.B. aufgrund von Erschütterungen, so daß die Dichtigkeit der Verbindung auch bei einer derartigen Belastung durch den an dem Einsteckabschnitt 14 und der inneren Umfangswand 11 anliegenden Dichtring 4 weiterhin gewährleistet ist. Ferner sind die mit dem Dichtring 4 zur Anlage kommenden Dichtflächen des Einsteckabschnitts 14 und der Umfangswand 11 auch im entkuppelten Zustand der Kupplungsteile 1, 2 gegen Beschädigungen von radial außen her geschützt.

Der Sicherungsring 5 hat eine radial innen umlaufende flache Rippe 33, die in eine passende Ringnut 34 auf der radial äußeren Seite des Endabschnitts 30 durch Zusammenstecken von Sicherungsring 5 und Aufnahmeabschnitt 6 nach dem Einführen des Dichtrings 4 einrastet.

Das Kupplungsteil 1 ist zusammen mit den Umfangswänden 10 und 11 einstückig aus einem linearen, teilkristallinen Polyphenylensulfid mit einer Verstärkungsfüllung aus beispielsweise Glasfasern oder Glasfaser-Mineral-Mischungen hergestellt und hat eine sehr hohe Temperaturbeständigkeit von bis zu 240°C, kurzzeitig sogar bis zu 270°C, eine inhärente Flammbeständigkeit, eine sehr gute Chemikalien- und Oxydationsbeständigkeit, eine hohe Härte und Steifheit, eine sehr geringe Wasseraufnahme und auch bei erhöhten Temperaturen nur eine geringe Kriechneigung.

Das Kupplungsteil 2 und der Sicherungsring 5 sind aus dem gleichen Kunststoff wie das Kupplungsteil 1 hergestellt.

Die Steckkupplung ist daher besonders für den Einsatz bei hohen Temperaturen der Umgebung und/oder des durch die Steckkupplung hindurchgeleiteten Fluids und auch für aggressive Fluide geeignet.

Zum Entkuppeln wird der Haltebügel 3 aus der in Fig. 1 dargestellten Lage durch Erfassen des radial vorstehenden mittleren Abschnitts des Querstücks 17 so weit aus den Schlitzen 12 herausgezogen, bis die Endabschnitte 19 jeweils in einer Axialebene zwischen einem der Vorsprünge 20 und einer der Nuten 21 liegen. In dieser Lage stehen die mittleren Abschnitte der Schenkel 15 des Haltebügels 3 nicht mehr radial auf der Innenseite der äußeren Umfangswand 10 vor, d.h. sie greifen nicht mehr in die Ringnut 13 ein, so daß die Kupplungsteile 1 und 2 weitgehend ungehindert auseinandergezogen werden können.

Axiale, sich diametral gegenüberliegende Nuten 35 in der Innenseite der äußeren Umfangswand 10 des Kupplungsteils 1 dienen der Aufnahme entsprechend in der Form angepaßter (nicht dargestellter) Rippen auf der Außenseite des Einsteckabschnitts 14, um die Kupplungsteile 1 und 2 nur in einer vorbestimmten relativen Drehwinkellage zusammenstecken zu können.

## Patentansprüche

1. Steckkupplung mit zwei zusammensteckbaren rohrförmigen Kupplungsteilen (1, 2) zum Verbinden zweier ein Fluid führender Bauteile, bei der ein Einsteckabschnitt (14) des einen Kupplungsteils (2) eine erste Ringnut (13) und ein Aufnahmeabschnitt (6) des anderen Kupplungsteils (1) zwei sich diametral gegenüberliegende Schlitze (12) und einen etwa U-förmigen elastischen Haltebügel (3) aufweist, dessen Schenkel (15) durch die Schlitze (12) ragen und beim Zusammenstecken der Kupplungsteile (1, 2) in die erste Ringnut (13) einrasten; mit einem Dichtring (4) zwischen den zusammengesteckten Kupplungsteilen (1, 2) und mit einem Sicherungsring (5), der zusammen mit dem anderen Kupplungsteil (1) und einer Schulter (31) dieses Kupplungsteils (1) eine den Dichtring (4) aufnehmende zweite Ringnut (32) begrenzt, wobei der Aufnahmeabschnitt (6) eine radial äußere Umfangswand (10) und eine radial innere Umfangswand (11) aufweist, zwischen denen der Einsteckabschnitt (14) einsteckbar ist, **dadurch gekennzeichnet, daß** die zweite Ringnut (32) im zusammengesteckten Zustand der Kupplungsteile (1, 2) radial innerhalb des Einsteckabschnitts (14) in derselben Radialebene wie die erste Ringnut (13) liegt und daß die radial innere Umfangswand (11) auf ihrer radial äußeren Umfangsseite die zweite Ringnut (32) aufweist.

2. Steckkupplung nach Anspruch 1, **dadurch gekennzeichnet, daß** die Umfangswände (10, 11) einstückig mit ihrem Kupplungsteil (1) geformt sind.

3. Steckkupplung nach Anspruch 1 oder 2, **dadurch gekennzeichnet, daß** die Kupplungsteile (1, 2) aus hochtemperaturbeständigem Kunststoff hergestellt sind.

4. Steckkupplung nach Anspruch 3, **dadurch gekennzeichnet, daß** der Kunststoff ein lineares, teilkristallines Polyphenylensulfid ist.

5. Steckkupplung nach einem der Ansprüche 1 bis 4, **dadurch gekennzeichnet, daß** das eine Kupplungsteil (1) am Ende seines Steckbereiches abgewinkelt ist.

## Claims

1. A plug coupling comprising two tubular coupling parts (1, 2) which can be plugged together for connecting two components carrying a fluid, in which a plug-in portion (14) of the one coupling part (2) has a first annular groove (13) and a receiving portion (9) of the other coupling part (1) has two diametrally mutually opposite slots (12) and a substantially U-shaped elastic retaining clip (3) whose limbs (15) project through the slots (12) and when the coupling parts (1, 2) are plugged together latch into the first annular groove (13); comprising a sealing ring (4) between the coupling parts (1, 2) which are fitted together and a securing ring (5) which together with the other coupling part (1) and a shoulder (31) of said coupling part (1) delimits a second annular groove (32) receiving the sealing ring (4), wherein the receiving portion (6) has a radially outward peripheral wall (10) and a radially inward peripheral wall (11), between which the plug-in portion (14) can be inserted, **characterised in that** the second annular groove (32) in the plugged-together condition of the coupling parts (1, 2) is disposed radially within the plug-in portion (14) in the same radial plane as the first annular groove (13) and that the radially inward peripheral wall (11) has the second annular groove (32) on its radially outward peripheral side.

2. A plug coupling according to claim 1 **characterised in that** the peripheral walls (10, 11) are formed in one piece with their coupling part (1).

3. A plug coupling according to claim 1 or claim 2 **characterised in that** the coupling parts (1, 2) are produced from high temperature-resistant plastic material.

4. A plug coupling according to claim 3 **characterised in that** the plastic material is a straight-chain, partly crystalline polyphenylene sulphide.

5. A plug coupling according to one of claims 1 to 4 **characterised in that** the one coupling part (1) is angled at the end of its plug region.

## Revendications

1. Raccord emboîtable avec deux parties tubulaires d'accouplement (1, 2) pour l'assemblage de deux éléments conduisant un fluide, où un tronçon d'emboîtement (14) de l'une des parties d'accouplement (2) présente une première rainure circulaire (13) et où un tronçon de positionnement (6) de l'autre partie d'accouplement (1) présente deux encoches diamétralement opposées (12) et une bride de retenue (3) élastique à peu près en U dont les branches entrent dans les encoches (12) et s'enclenchent dans la première rainure circulaire (13) à l'emboîtement des parties d'accouplement (1, 2); avec un joint d'étanchéité (4) entre les parties d'accouplement emboîtées (1, 2) et avec une bague de blocage (5) qui, associée à l'autre partie d'accouplement (1) et à un épaulement (31) de cette partie d'accouplement (1), délimite une deuxième rainure circulaire (32) recevant le joint d'étanchéité (4), dans lequel le tronçon de positionnement (6) présente une paroi circonférentielle radialement extérieure (10) et une paroi circonférentielle radialement intérieure (11) entre lesquelles le tronçon d'emboîtement (14) peut être emboîté, **caractérisé en ce que** la deuxième rainure circulaire (32), lorsque les parties d'accouplement (1, 2) sont à l'état emboîté, se trouve radialement à l'intérieur du tronçon d'emboîtement (14) dans le même plan radial que la première rainure circulaire (13) et **en ce que** la paroi circonférentielle radialement intérieure (11) présente, sur sa face circonférentielle radialement extérieure, la deuxième rainure circulaire (32).

2. Raccord emboîtable selon la revendication 1, **caractérisé en ce que** les parois circonférentielles (10, 11) sont moulées d'une pièce avec leur partie d'accouplement (1).

3. Raccord emboîtable selon la revendication 1 ou 2, **caractérisé en ce que** les parties d'accouplement (1, 2) sont fabriquées en matière plastique à haute résistance thermique.

4. Raccord emboîtable selon la revendication 3, **caractérisé en ce que** cette matière plastique est un polysulfure de phénylène linéaire semi-cristallin.

5. Raccord emboîtable selon l'une quelconque des revendications 1 à 4, **caractérisé en ce que** l'une des parties d'accouplement (1) est coudée à l'extrémité de sa portion emboîtable.
